# EUROPÄISCHE PATENTSCHRIFT

(11) **EP 2 911 962 B1**
(45) Veröffentlichungstag und Bekanntmachung des Hinweises auf die Patenterteilung: **24.08.2016**
(21) Anmeldenummer: 14700921.1
(22) Anmeldetag: 20.01.2014
(51) Int. Cl.: B65G 47/91, B25J 15/06

(54) **FLÄCHENSAUGGREIFER**
SUCTION GRIPPER FOR FLAT ARTICLES
VENTOUSE POUR DES ARTICLES PLATS

(30) Priorität: 25.01.2013 DE 102013201250
(43) Veröffentlichungstag der Anmeldung: 02.09.2015
(73) Patentinhaber: J. Schmalz GmbH, 72293 Glatten (DE)
(72) Erfinder: HARTER, Leonhard, 72290 Wittendorf (DE)
(74) Vertreter: DREISS Patentanwälte PartG mbB
(86) Internationale Anmeldenummer: PCT/EP2014/051028
(87) Internationale Veröffentlichungsnummer: WO 2014/114594

(56) Entgegenhaltungen:
- WO-A2-2012/134055
- DE-C1- 10 216 221
- US-B2- 7 661 736

## Beschreibung

Die Erfindung betrifft einen Flächensauggreifer mit einem Gehäuse, wenigstens einer das Gehäuse stirnseitig verschließenden Deckelplatte, einem in das Gehäuse einschiebbaren Einschub, wobei der Einschub an der Deckelplatte befestigbar ist und wenigstens eine Öffnung aufweist, die mit Saugöffnungen im Gehäuse strömungsverbunden ist, und die Deckelplatte einen Drucklufteinlass aufweist, an welchen eine Druckluftversorgung anschließbar ist.

Ein derartiger Flächensauggreifer ist bereits aus US-B-7 661 736 bekannt.

Flächensauggreifer sind in bekannter Weise derart aufgebaut, dass die erforderlichen Ventile zur Steuerung eines Unterdruckerzeugers, z.B. Ejektors, außen auf das Gehäuse oder die Deckelplatte aufgesetzt werden. Entsprechendes gilt für Ventileinrichtungen zur Erzeugung von Druckluftimpulsen zum Abblasen des Werkstückes. Derartige Flächensauggreifer sind relativ schwierig auf andere Unterdruckerzeuger umzurüsten. Außerdem beanspruchen extern angesetzte Steuerventile Platz und sind der Gefahr von Beschädigungen ausgesetzt.

Der Erfindung liegt die Aufgabe zugrunde, einen zuverlässig betreibbaren Flächensauggreifer bereitzustellen, der einfach für einen Betrieb mit anderen Unterdruckerzeuger oder auf andere Funktionalitäten umrüstbar ist.

Diese Aufgabe wird durch einen Flächensauggreifer gemäß Anspruch 1 gelöst. Der an der Deckelplatte befestigbare Einschub weist wenigstens eine Öffnung auf, die mit den Saugöffnungen strömungsverbunden ist. Im Einschub ist eine Funktionseinrichtung zur Steuerung einer Strömung durch die Öffnung des Einschubs vorgesehen.

Der erfindungsgemäße Flächensauggreifer ist modular aufgebaut und weist eine universell verwendbare Deckelplatte auf, an welche der Einschub mit der Funktionseinrichtung anbaubar ist, insbesondere lösbar befestigt werden kann bzw. lösbar montiert ist. Zum Umrüsten des Flächensauggreifers muss also lediglich die Deckelplatte vom Gehäuse entfernt und der Einschub ausgetauscht werden. Die Deckelplatte ist vorzugsweise ebenfalls lösbar an dem Gehäuse anbaubar.

Je nach Ausgestaltung der Funktionseinrichtung des Einschubs kann der Flächensauggreifer für eine interne Unterdruckerzeugung oder zum Anschluss an eine externe Unterdruckerzeugung verwendet werden.

Da die Steuerventile in die Deckelplatte integriert sind, stehen sie für alle Anwendungsformen zur Verfügung. Insofern weist die Deckelplatte wenigstens ein Steuerventil zur Ansteuerung der in dem Einschub vorgesehenen Funktionseinrichtung auf. Insbesondere ist in die Deckelplatte wenigstes ein Absperrorgan für den Drucklufteinlass integriert.

Durch den modularen Aufbau ist eine kostengünstige Umrüstung des Flächensauggreifer auf andere Funktionen bzw. andere Unterdruckversorgungen möglich. Die integrierten Steuereinheiten in der Deckelplatte können für die interne Unterdruckerzeugung oder auch für die Zu- und Abschaltung der Verbindung mit einer externen Unterdruckerzeugung verwendet werden.

Die Funktionseinrichtung ist vorzugsweise ein Unterdruckerzeuger (insbesondere zum Erzeugen von Unterdruck in der Öffnung des Einschubs), und/oder ein Absperrorgan für eine Öffnung des Einschubs.

Der Einschub weist vorzugsweise ein von dem Gehäuse des Flächensauggreifers separates Einschubgehäuse auf, in welchem die Funktionseinrichtung aufgenommen ist. Zur Umrüstung kann der Einschub daher als kompaktes Modul ausgetauscht werden. Denkbar ist jedoch auch, dass die Funktionseinrichtung direkt, insbesondere gehäusefrei, an die Deckelplatte befestigt bzw. anmontiert ist. So kann der benötigte Bauraum verringert werden.

Weitere Vorteile, Merkmale und Einzelheiten ergeben sich aus den Unteransprüchen und werden im Folgenden anhand der Figuren erläutert.

Es zeigen:
Figur 1 Längsschnitt durch einen erfindungsgemäßen Flächensauggreifer;
Figur 2 eine weitere Ausführungsform eines erfindungsgemäßen Flächensauggreifers im Längsschnitt.

In der nachfolgenden Beschreibung sowie in den Figuren sind für identische oder einander entsprechende Merkmale jeweils dieselben Bezugszeichen verwendet.

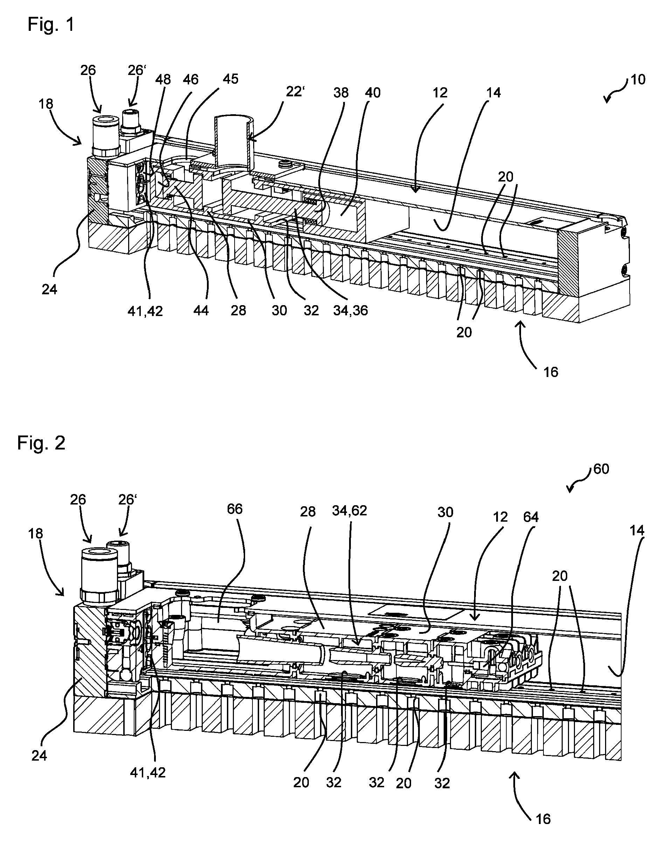

Der in der Figur 1 dargestellte Flächensauggreifer 10 weist ein im dargestellten Beispiel im Wesentlichen quaderförmiges Gehäuse 12 auf, welches in der Figur 1 im Längsschnitt dargestellt ist. Das Gehäuse 12 begrenzt in seinem Inneren einen Saugraum 14 und weist eine Saugseite 16 auf, an welche im Betrieb des Flächensauggreifers ein nicht dargestelltes Werkstück anlegbar ist und angesaugt werden kann. Das Gehäuse 12 hat außerdem eine von der Saugseite 16 verschiedene Stirnseite 18, die im dargestellten Beispiel von einer Schmalseite des quaderförmigen Gehäuses 12 gebildet ist. Das Gehäuse 12 weist außerdem mehrere Saugöffnungen 20 auf, welche im dargestellten Beispiel die Saugseite 16 durchsetzen und so eine Strömungsverbindung mit dem Saugraum 14 herstellen.

Der in Figur 1 dargestellte Flächensauggreifer 10 ist zum Betrieb mit einer externen Unterdruckversorgung ausgebildet. Hierzu weist das Gehäuse 12 einen Unterdruckversorgungsanschluss 22 auf, welcher z.B. einen entsprechenden Anschlussstutzen zum Anschluss eines Vakuumschlauches aufweisen kann. Die Stirnseite 18 des Gehäuses 12 ist mit einer vorzugsweise lösbar montierten Deckelplatte 24 verschlossen. Die Deckelplatte 24 weist im dargestellten Beispiel einen Drucklufteinlass 26 auf, welcher zur Verbindung mit einer Druckluftversorgung dienen und beispielsweise entsprechende Anschlussstutzen aufweisen kann. Es können auch mehrere Drucklufteinlässe vorgesehen sein.

In dem von dem Gehäuse 12 umschlossenen Innenraum ist ein Einschub 28 angeordnet, welcher im dargestellten Beispiel in der Art eines Einschubmoduls mit einem eigenen Einschubgehäuse 30 ausgebildet ist. Das Einschubgehäuse 30 ist in das Gehäuse 12 des Flächensauggreifers 10 eingeschoben und ist an der Deckelplatte 24 montiert. Vorzugsweise ist die Befestigung des Einschubs an der Deckelplatte 24 lösbar, so dass der Einschub 28 zur Umrüstung des Flächensauggreifers 10 austauschbar ist.

Der Einschub 28 dient grundsätzlich dazu, im Betrieb des Flächensauggreifers die Strömung durch die Saugöffnungen 20 zu steuern und so die Funktionen des Flächensauggreifers zu beeinflussen. Zum Ansaugen eines Werkstückes an die Stirnseite 18 wird Luft aufgrund eines im Saugraum 14 herrschenden Unterdrucks durch die Saugöffnungen 20 eingesaugt. Um das Werkstück kontrolliert von der Stirnseite 18 lösen zu können, kann das Saugen eingestellt oder auch ein Abblasimpuls in Form einer Strömung aus dem Saugraum 14 durch die Saugöffnung 20 hinaus eingesetzt werden.

Der Einschub 28 hat wenigstens eine Öffnung 32, die in den Saugraum 14 mündet und so mit den Saugöffnungen 20 des Gehäuses 12 des Flächensauggreifers 10 strömungsverbunden ist. Der Einschub 28 umfasst eine Funktionseinrichtung 34, mittels welcher die Strömung durch die Öffnung 32 des Einschubs 28 und somit auch eine Strömung durch die Saugöffnungen 20 steuerbar ist. Im Falle der Figur 1 umfasst die Funktionseinrichtung 34 ein kolbenartiges Absperrorgan 36, welches zwischen einer Saugstellung und einer Schließstellung in dem Einschub 28 verschiebbar ist. In der Saugstellung ist der Unterdruckversorgungsanschluss 22 durch den Einschub 28 mit der Öffnung 32 des Einschubs 28 strömungsverbunden, so dass Luft durch die Saugöffnungen 20 in den Saugraum 14, durch die Öffnung 32 und schließlich durch den Unterdruckversorgungsanschluss 22 absaugbar ist. In der Schließstellung ist die Strömungsverbindung zwischen dem Unterdruckversorgungsanschluss 22 und der Öffnung 32 des Einschubs 28 unterbrochen.

Im Falle der Figur 1 ist das Absperrorgan 36 der Funktionseinrichtung 34 pneumatisch ansteuerbar. Hierzu weist das Absperrorgan 36 einen Steuerkolbenabschnitt 38 auf, welcher einen Steuerraum 40 begrenzt, der zur Verlagerung des Absperrorgans 36 zwischen Schließstellung und Saugstellung mit Druckluft beaufschlagbar ist. Hierzu ist der Steuerraum 40 durch einen im Schnitt der Figur 1 nicht dargestellten Verbindungskanal, welcher den Einschub 28 in Richtung zur Stirnseite 18 hin durchsetzt, mit einem Druckluftauslass 41 der Deckelplatte 24 bzw. eines in der Deckelplatte 24 integrierten Steuerventils 42 verbunden. Mittels des Steuerventils 24 kann eine Strömungsverbindung zu einem Drucklufteinlass 26 hergestellt werden. Hierzu kann das Steuerventil 42 wiederum ein Absperrorgan aufweisen, z.B. einen verlagerbaren Steuerkolben. Das Absperrorgan kann elektrisch ansteuerbar sein, wobei ein entsprechender Steueranschluss 26' ebenfalls an der Deckelplatte 24 angeordnet sein kann.

Die Funktionseinrichtung 34 umfasst ein weiteres kolbenartiges Absperrorgan 44, welches zwischen einer Neutralstellung und einer Belüftungsstellung in dem Einschub 28 verlagerbar ist. In der Belüftungsstellung kann eine Strömungsverbindung zwischen dem Unterdruckversorgungsanschluss 22 und einer Belüftungsöffnung 45 des Flächensauggreifers 10, beispielsweise zur Umgebung, hergestellt werden. In der Neutralstellung ist diese Strömungsverbindung vorzugsweise unterbrochen. Diese Ausgestaltung ermöglicht es, im Schließzustand des ersten Absperrorgans 36 eine Strömungsverbindung zur von der Belüftungsöffnung 45 zum Unterdruckversorgungsanschluss 22 herzustellen, so dass der angeschlossene externe Kühlluft ansaugen kann, und so ein Überhitzen vermieden werden kann. Auch das weitere Absperrorgan 44 kann pneumatisch angesteuert sein, beispielsweise über einen Steuerraum 46, welcher mittels eines weiteren Steuerventils 48 der Deckelplatte 24 kontrolliert mit Druckluft beaufschlagbar ist.

Die Figur 2 zeigt einen weiteren Flächensauggreifer 60, welcher sich von dem in der Figur 1 gezeigten Flächensauggreifer im Wesentlichen durch die Ausgestaltung der Funktionseinrichtung 34 des Einschubs 28 unterscheidet. Die Funktionseinrichtung 34 umfasst hier einen druckluftbetriebenen Unterdruckerzeuger 62, welcher im dargestellten Beispiel als Drei-Stufen-Ejektor mit drei aufeinander folgenden Treibdüsen bzw. Empfängerdüsen ausgebildet ist. In dem Einschub 28 ist ein Verteilerraum 64 ausgebildet, welcher mit einem entsprechenden Drucklufteinlass und über einen in dem Schnitt gemäß Figur 2 nicht dargestellten Verbindungskanal mit dem Auslass eines Steuerventils 42 der Deckelplatte 24 strömungsverbunden ist. Dadurch kann der Verteilerraum 64 über das Steuerventil 42 kontrolliert mit Druckluft aus dem Drucklufteinlass 26 versorgt werden. Über die in den Verteilerraum 64 eingespeiste Druckluft werden in grundsätzlich bekannter Weise die Düsen des Ejektors 62 gespeist, so dass durch die mehreren Öffnungen 32 des Einschubs 28 Luft absaugbar ist. Der Einschub 28 weist ferner eine Abluftöffnung 66 auf, welche über einen entsprechenden Durchbruch im Gehäuse 12 mit der Umgebung verbunden ist, so dass die Abluft des Ejektors 62 abführbar ist. Mittels des Steuerventils 42 kann daher der Funktionszustand des Ejektors 62 kontrolliert angesteuert werden.

Ein grundsätzlicher Vorteil des modularen Aufbaus mit Deckelplatte 24 und Einschub 28 besteht darin, dass durch Austausch des Einschubs 28 eine Umrüstung des Flächensauggreifers möglich ist. Insbesondere kann grundsätzlich dieselbe Deckelplatte 24 mit ihren integrierten Steuerventilen 42 zur Ansteuerung eines Flächensauggreifers mit einer externen Unterdruckversorgung (vgl. Figur 1), oder auch zum Betrieb mit einem integrierten Unterdruckerzeuger (vgl. Figur 2) zu verwenden.

Zur weiteren Ausgestaltung kann bei sämtlichen Ausführungsformen die Funktionseinrichtung 34 auch derart ausgebildet sein, dass über ein entsprechendes Absperrorgan kontrolliert eine Verbindung zwischen der Öffnung 32 und einem Drucklufteinlass 26 hergestellt werden kann, so dass zum Ablösen eines angesaugten Werkstückes ein Druckluftimpuls durch eine weitere Öffnung des Einschubs 28 und damit durch die Saugöffnung 20 erzeugt werden kann. Vorzugsweise ist auch dieses Absperrorgan über ein entsprechendes Steuerventil (in der Art des Steuerventils 42 bzw. 48) in der Deckelplatte 24 ansteuerbar.

## Patentansprüche

1. Flächensauggreifer (10, 60) mit einem Gehäuse (12) mit Saugöffnungen (20) zum Ansaugen eines zu greifenden Werkstückes, wenigstens einer das Gehäuse (12) stirnseitig verschließenden Deckelplatte (24), einem in das Gehäuse (12) einschiebbaren Einschub (28), wobei der Einschub (28) an der Deckelplatte (24) befestigbar ist und wenigstens eine Öffnung (32) aufweist, die mit den Saugöffnungen (20) strömungsverbunden ist, und wobei die Deckelplatte (24) einen Drucklufteinlass (26) aufweist, **dadurch gekennzeichnet, dass** in die Deckelplatte (24) wenigstens ein Steuerventil (42, 48) integriert ist, und dass der Einschub (28) eine Funktionseinrichtung (34) zur Steuerung einer Strömung durch die Öffnung (32) des Einschubs (28) umfasst.

2. Flächensauggreifer (10, 60) nach Anspruch 1, **dadurch gekennzeichnet, dass** die Funktionseinrichtung (34) ein Unterdruckerzeuger (62) oder ein Absperrorgan (36, 44) für eine Öffnung (32) des Einschubs (28) aufweist.

3. Flächensauggreifer (10) nach einem der vorherigen Ansprüche, **dadurch gekennzeichnet, dass** der Einschub (28) ein eigenes Einschubgehäuse (30) aufweist, in welchem die Funktionseinrichtung (34) aufgenommen ist.

4. Flächensauggreifer nach einem der vorherigen Ansprüche, **dadurch gekennzeichnet, dass** in die Deckelplatte (24) wenigstes ein Steuerventil oder Absperrorgan (42, 48) für den Drucklufteinlass (26) integriert ist.

5. Flächensauggreifer nach Anspruch 4, **dadurch gekennzeichnet, dass** das Steuerventil oder Absperrorgan für den Drucklufteinlass elektrisch ansteuerbar ist.

6. Flächensauggreifer nach einem der Ansprüche 4, 5, **dadurch gekennzeichnet, dass** das Absperrorgan für den Drucklufteinlass ein 3-2-Wegeventil ist.

7. Flächensauggreifer (10, 60) nach einem der vorhergehenden Ansprüche, **dadurch gekennzeichnet, dass** die Deckelplatte (24) zumindest zwei Druckluftauslässe (41) aufweist.

8. Flächensauggreifer (60) nach Anspruch 7, **dadurch gekennzeichnet, dass** ein erster Druckluftauslass (41) mit einem Drucklufteinlass (64) eines Unterdruckerzeugers (62) der Funktionseinrichtung (34), insbesondere eines Ejektors, verbunden ist.

9. Flächensauggreifer nach Anspruch7 oder 8, **dadurch gekennzeichnet, dass** ein zweiter Auslass mit einer Abblaseinrichtung verbunden ist.

10. Flächensauggreifer nach wenigstens der Ansprüche 4 und 7, **dadurch gekennzeichnet, dass** die beiden Druckluftauslässe mit je einem Antrieb für das Absperrorgan verbunden sind.

11. Flächensauggreifer (10) nach einem der Ansprüche 4-10, **dadurch gekennzeichnet, dass** das Absperrorgan (44) ein Flachschieber, ein Kugelschieber (Kugelhahn),eine Klappe oder ein Kolbenelement ist.

## Claims

1. A surface area vacuum gripper (10, 60) having a housing (12) with suction openings (20) for applying suction to a workpiece that is to be gripped, at least one cover plate (24) that seals the front surface of the housing (12), an insert element (28) that can be inserted into the housing (12), wherein the insert element (28) can be attached to the cover plate (24) and has at least one opening (32) that has a flow connection to the suction openings (20), and wherein the cover plate (24) has a pressurized air inlet (26), **characterized in that** at least one control valve (42, 48) is integrated in the cover plate (24), and wherein the insert element (28) comprises a functional device (34) for controlling a flow through the opening (32) in the insert element (28).

2. Surface area vacuum gripper (10, 60) according to claim 1, **characterized in that** the functional device (34) has a vacuum generator (62) or a shut-off device (36, 44) for an opening (32) in the insert element (28).

3. Surface area vacuum gripper (10) according to one of the preceding claims, **characterized in that** the insert element (28) has its own insertion housing (30), in which the functional device (34) is accommodated.

4. Surface area vacuum gripper according to one of the preceding claims, **characterized in that** at least one control valve or shut-off device (42, 48) for the pressurized air inlet is integrated in the cover plate (24).

5. Surface area vacuum gripper according to claim 4, **characterized in that** the control valve or shut-off device for the pressurized air inlet can be activated electrically.

6. Surface area vacuum gripper according to claim 4 or 5, **characterized in that** the shut-off device for the pressurized air inlet is a 3-2 way valve.

7. Surface area vacuum gripper (10, 60) according to one of the preceding claims, **characterized in that** the cover plate (24) has at least two pressurized air outlets (41).

8. Surface area vacuum gripper (60) according to claim 8, **characterized in that** a first pressurized air outlet (41) is connected to a pressurized air inlet (64) of a vacuum generator (62) of the functional device (34), in particular an ejector.

9. Surface area vacuum gripper according to claim 7 or 8, **characterized in that** a second outlet is connected to cleaning blower.

10. Surface area vacuum gripper according to at least claim 4 and 7, **characterized in that** the two pressurized air outlets are each connected to a drive for the shut-off device.

11. Surface area vacuum gripper (10) according to one of the claims 4 to 10, **characterized in that** the shut-off device (44) is a flat slider, a ball valve (ball cock), a lid, or a piston element.

## Revendications

1. Ventouse grande surface (10, 60) comprenant un boîtier (12) ayant des ouvertures d'aspiration (20) destinées à aspirer une pièce à saisir, au moins une plaque formant couvercle (24) qui ferme ledit boîtier (12) sur la face frontale, un tiroir (28) apte à être introduit dans le boîtier (12), ledit tiroir (28) pouvant être fixé sur ladite plaque formant couvercle (24) et présentant au moins une ouverture (32) qui est en communication fluidique avec les ouvertures d'aspiration (20), et ladite plaque formant couvercle (24) présentant une entrée d'air comprimé (26), **caractérisée par le fait qu'**au moins une valve de commande (42, 48) est intégrée à la plaque formant couvercle (24) et que ledit tiroir (28) comprend un dispositif fonctionnel (34) pour commander un écoulement à travers ladite ouverture (32) du tiroir (28).

2. Ventouse grande surface (10, 60) selon la revendication 1, **caractérisée par le fait que** ledit dispositif fonctionnel (34) présente un générateur de dépression (62) ou un organe d'arrêt (36, 44) pour une ouverture (32) du tiroir (28).

3. Ventouse grande surface (10) selon l'une quelconque des revendications précédentes, **caractérisée par le fait que** ledit tiroir (28) présente un propre boîtier de tiroir (30) à l'intérieur duquel est logé ledit dispositif fonctionnel (34).

4. Ventouse grande surface selon l'une quelconque des revendications précédentes, **caractérisée par le fait qu'**au moins une valve de commande ou un organe d'arrêt (42, 48) pour l'entrée d'air comprimé (26) est intégré(e) à la plaque formant couvercle (24).

5. Ventouse grande surface selon la revendication 4, **caractérisée par le fait que** la valve de commande ou l'organe d'arrêt pour l'entrée d'air comprimé peut être commandé(e) électriquement.

6. Ventouse grande surface selon l'une quelconque des revendications 4, 5, **caractérisée par le fait que** ledit organe d'arrêt pour l'entrée d'air comprimé est une vanne à 3/2 voies.

7. Ventouse grande surface (10, 60) selon l'une quelconque des revendications précédentes, **caractérisée par le fait que** la plaque formant couvercle (24) présente au moins deux sorties d'air comprimé (41).

8. Ventouse grande surface (60) selon la revendication 7, **caractérisée par le fait qu'**une première sortie d'air comprimé (41) est reliée à une entrée d'air comprimé (64) d'un générateur de dépression (62) du dispositif fonctionnel (34), en particulier d'un éjecteur.

9. Ventouse grande surface selon la revendication 7 ou 8, **caractérisée par le fait qu'**une deuxième sortie est reliée à un dispositif de détachement par soufflage.

10. Ventouse grande surface selon les revendications 4 et 7 au moins, **caractérisée par le fait que** les deux sorties d'air comprimé sont reliées chacune à un mécanisme d'entraînement pour ledit organe d'arrêt.

11. Ventouse grande surface (10) selon l'une quelconque des revendications 4 à 10, **caractérisée par le fait que** ledit organe d'arrêt (44) est un tiroir plan, une vanne sphérique (robinet à boisseau sphérique), un clapet ou un élément de piston.
